# EUROPÄISCHE PATENTSCHRIFT

(11) **EP 0 331 203 B1**
(45) Veröffentlichungstag und Bekanntmachung des Hinweises auf die Patenterteilung: **07.09.1994**
(21) Anmeldenummer: 89103827.5
(22) Anmeldetag: 04.03.1989
(51) Int. Cl.: B62D 7/15

(54) **Verfahren zum gleichsinnigen Auslenken der Hinterräder eines Kraftfahrzeuges in Abhängigkeit von der Auslenkung der Vorderräder**
Method of steering the rear wheels of a motor vehicle in the same direction depending upon the steering of the front wheels
Méthode de commande du braquage simultané des roues arrière d'un véhicule en fonction du braquage des roues avant

(30) Priorität: 04.03.1988 DE 3807100
(43) Veröffentlichungstag der Anmeldung: 06.09.1989
(73) Patentinhaber: Bayerische Motoren Werke Aktiengesellschaft, 80788 München (DE)
(72) Erfinder: Zieglmeier, Franz, D-8000 München 40 (DE); Rampf, Willy, D-8059 Thalheim (DE); Manseicher, Josef, D-8000 München 81 (DE); Fehrer, Peter, D-8089 Emmering (DE)

(56) Entgegenhaltungen:
- EP-A- 0 278 366
- DE-A- 3 816 486
- PATENT ABSTRACTS OF JAPAN vol. 12, no. 274 (M-725)(3121) 29 Juli 1988,& JP-A-63 57374 (MAZDA MOTOR CORP.) 12. März 1988
- PATENT ABSTRACTS OF JAPAN vol. 11, no. 372 (M-648)(2819) 04 Dezember 1987,& JP-A-62 146782 (DAIHATSU MOTOR CO LTD) 30.Juni 1987,

## Beschreibung

Die Erfindung bezieht sich auf ein Verfahren nach dem Oberbegriff des Patentanspruchs 1.

Übliche Vierradlenkungen zeigen insbesondere bei höheren Geschwindigkeiten ein gleichsinniges Auslenken der Hinterräder, bezogen auf die Auslenkung der Vorderräder. Dadurch wird die Fahrdynamik des Kraftfahrzeuges gegenüber konventionell nur mit den Vorderrädern gelenkten Kraftfahrzeugen verbessert. Diese Verbesserung zeigt sich im Reaktionsverhalten bei plötzlichen und relativ starken Auslenkungen der Vorderräder. Derartige Situationen treten insbesondere bei Fahrten mit hoher Geschwindigkeit auf Autobahnen, zum Spurwechseln oder zum Ausweichen vor einem überraschend auftauchenden Hindernis auf.

Vierrad-Lenkverfahren für Kraftfahrzeuge mit gleichsinnigem Auslenken der Hinterräder führen in der Regel zu einem Verstärken der Untersteuerungstendenz des Kraftfahrzeugs gegenüber konventionell nur an den Vorderrädern gelenkten Kraftfahrzeugen. Ursache dafür ist, daß über die gelenkten Hinterräder verstärkt Seitenkraft übertragen wird. Der Umfang,in dem Seitenkraft übertragen werden kann, ist für eine vorgegebene Geschwindigkeit seinerseits abhängig vom Lenkwinkel und auf einen maximalen Wert begrenzt. Dies gilt sowohl für Vorder- als auch für Hinterräder.

Bedingt durch den Zusammenhang zwischen Seitenkraft und Lenk- bzw. Schräglaufwinkel eines Reifens und bedingt durch den bei untersteurnd ausgelegten Kraftfahrzeugen üblicherweise kleineren Wert des Hinterrad-Schräglaufwinkels gegenüber dem Vorderrad-Schräglaufwinkel ist der Gradient von Seitenkraft zu Schräglauf an der Hinterachse größer als an der Vorderachse.

Im Bereich der maximal übertragbaren Vorderachs-Seitenkraft wird der durch eine Schräglaufwinkelvergrößerung erzeugte Seitenkraftzuwachs an der Vorderachse deutlich geringer als an der Hinterachse. Das Verhältnis von Seitenkraftänderung an der Vorderachse zu Seitenkraftänderung an der Hinterachse ändert sich dadurch stark. Dies verursacht im Fahrverhalten bei Lenkbewegungen mit Schräglaufwinkelanstieg gerade im Bereich der maximal übertragbaren Vorderachsseitenkraft und damit hoher Querbeschleunigung starkes Untersteuern, bei Schräglaufwinkelreduzierung einen unharmonischen und raschen Abbau der Untersteuertendenz. Es ergibt sich dadurch ein deutlich unterschiedliches Fahrverhalten beim An- und Zurücklenken.

Der Erfindung liegt die Aufgabe zugrunde, die überproportionale Untersteuertendenz gerade im Bereich hoher Querbeschleunigungen deutlich zu verringern und beim An-und Zurücklenken ein zumindest ähnliches Fahrverhalten hervorzurufen.

Die Erfindung löst diese Aufgabe durch die kennzeichnenden Merkmale des Patentanspruchs 1.

Der Zusammenhang zwischen übertragbarer Seitenkraft und Schräglaufwinkel besagt, daß bis hin zu dem - auf den Schräglaufwinkel bezogen - jeweiligen Seitenkraftmaximum die maximal übertragbare Seitenkraft mit dem Schräglaufwinkel zunimmt. Oberhalb dieses Maximums kann jedoch bei weiter zunehmendem Schräglaufwinkel keine Seitenkraft mehr übertragen werden. Im Extremfall wird sogar die optimal übertragbare Seitenkraft gegenüber dem Maximum dann verringert. Würde nun nach einem definierten, z. B. linearen, Zusammenhang der Lenkwinkel der Hinterräder auch dann noch vergrößert werden, wenn die Vorderräder bereits das Seitenkraftmaximum übertragen, so würde die über die Hinterräder übertragbare Seitenkraft zunehmen, während über die Vorderräder kein Zuwachs an übertragbarer Seitenkraft zu verzeichnen wäre. Vorausgesetzt ist der bei Vierradlenkungen selbstverständliche Zustand, bei dem die Hinterräder das Seitenkraftoptimum bzw. -maximum noch nicht erreicht haben.

Der Lenkwinkel der Hinterräder wird somit auf den Wert begrenzt, bei dessen entsprechendem Lenkwinkel die Vorderräder die maximale Seitenkraft übertragen. Entsprechend gilt beim Zurücklenken, daß die Hinterräder erst dann wieder in die Ausgangslage verstellt werden, wenn die Vorderräder den Lenkwinkel unterschreiten, bei dem sie das Seitenkraftmaximum übertragen. Dadurch wird sowohl beim An- als auch beim Zurücklenken ein gleiches Fahrverhalten erzielt. Dies ist unabhängig von der Richtung, in der die Vorder- und Hinterräder verstellt werden und lediglich abhängig vom Lenkwinkel der Vorderräder.

Selbstverständlich spielt für die Fahrdynamik der Zusammenhang der Lenkwinkel von Vorder- und Hinterräder, zumindest bis zu dem für das Seitenkraftmaximum der Vorderräder gehörigen Lenkwinkel der Vorderräder eine wichtige Rolle. Dieser Zusammenhang zwischen den beiden Lenkwinkeln kann linear oder aber auch nicht-linear, beispielsweise progressiv oder evtl. auch degressiv sein. Er kann ferner auch durch ein verzögertes Ansprechverhalten der Hinterräder gegenüber dem der Vorderräder geprägt sein.

Zusätzliche steuerungstechnische Maßnahmen dienen der Verbesserung des erfindungsgemäßen Verfahrens. Sie sind Gegenstand der weiteren Patentansprüche und dienen für den Patentanspruch
2 dazu, den Einfluß der Fahrzeuggeschwindigkeit auf den Zusammenhang zwischen Seitenkraft und Schräglaufwinkel in allgemeiner Form zu berücksichtigen,
3 dazu, diesen Zusammenhang detailliert zu berücksichtigen und
4 dazu, noch vor Erreichen des Seitenkraftmaximums ein fahrdynamisch besonders günstiges Verhalten des Kraftfahrzeugs zu erzielen.

Die Erfindung ist anhand der Zeichnung weiter erläutert. Es zeigt:
- Fig. 1: den prinzipiellen Zusammenhang zwischen Seitenkraft und Schräglaufwinkel eines Fahrzeugreifens
- Fig. 2: die Lage des Seitenkraftmaximums der Vorderachse in Abhängigkeit von Fahrgeschwindigkeit und Vorderachs-Lenkwinkel
- Fig. 3: den geschwindigkeitsabhängigen Zusammenhang zwischen Hinterachs und Vorderachslenkwinkel
- Fig. 4: eine praxisgerechte Modifizierung des Zusammenhangs von Fig. 3.

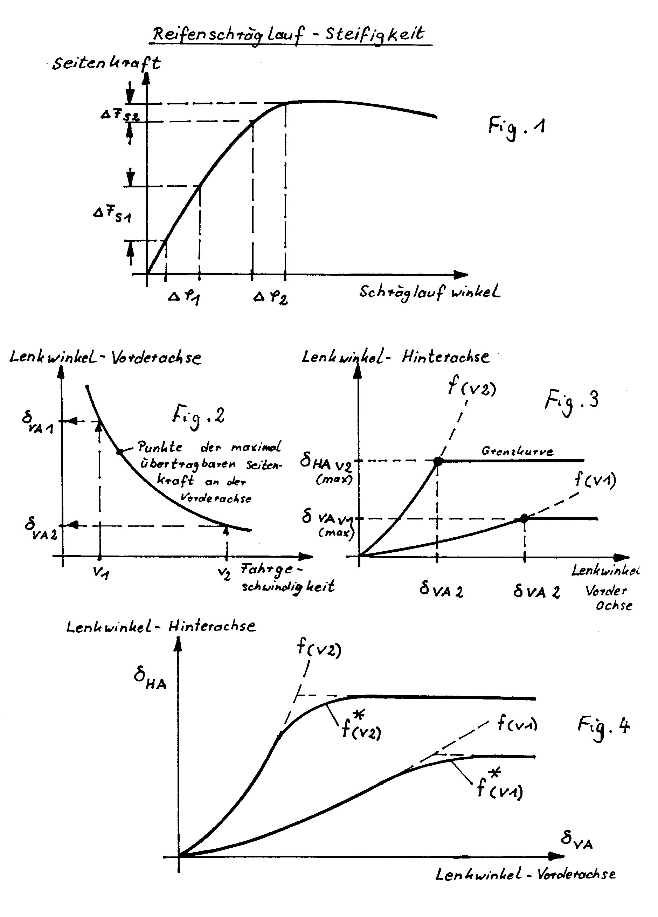

Fig. 1 zeigt den prinzipiellen Zusammenhang zwischen der über einen nicht dargestellten Kraftfahrzeug-Reifen übertragbaren Seitenkraft Fs und dem Schräglaufwinkel dieses Reifens für eine vorgegebene Radlast. Der Schräglaufwinkel ist ein dynamischer Wert; er ist abhängig von der Radlast, der Seitenkraft, dem Reifentyp (Sommer-/Winterreifen usw.) und dem Reibwert zwischen Reifen und Fahrbahn. Der Schräglaufwinkel ist der Winkel zwischen der Bewegungsbahn des seitenkraftfreien Rades und dem mit Seitenkraft beaufschlagten Rades.

Deutlich ist zu erkennen, daß die übertragbare Seitenkraft für jeden Schräglaufwinkel auf einen optimalen Wert begrenzt ist. Die Grenzkurve zeigt einen degressiven, nach dem Maximum leicht abfallenden Verlauf. Sie steigt, ausgehend von der Geradeausstellung des Reifens (Schräglaufwinkel = 0) zunächst relativ stark an. Dieser Anstieg wird jedoch umso geringer, je größer der Schräglaufwinkel wird. Bei einem Optimalwert des Schräglaufwinkels erreicht die übertragbare Seitenkraft einen Höchstwert, den sie bei einer Vergrößerung des Lenkwinkels beibehält oder demgegenüber sogar verringert.

Aus dem in Fig. 1 gezeigten prinzipiellen Verlauf der maximal übertragbaren Seitenkraft ergibt sich, daß diese durch Vergrößerung des Schräglaufwinkels nicht beliebig gesteigert werden kann, sondern aufgrund der physikalischen Zusammenhänge einen nichtlinearen und durch ein Maximum geprägten Zusammenhang mit dem Schräglaufwinkel besitzt. Weitere Einflußgrößen für den Verlauf der Grenzkurve sind die Haftreibung und die Radlast, die jedoch zunächst nicht berücksichtigt werden sollen.

Da bei üblichen Vierrad-Lenkungen die Vorderräder in der Regel stärker ausgelenkt werden als die Hinterräder, bedeutet dies, daß die Vorderräder noch vor den Hinterrädern das Seitenkraftmaximum erreichen. Wenn z. B. die Fahrzeuggeschwindigkeit erhöht wird, können sie keine weitere Seitenkraft mehr übertragen. Im Gegensatz dazu haben die Hinterräder dann noch nicht ihr Seitenkraftoptimum erreicht. Ist der Zusammenhang zwischen dem Lenkwinkel der Hinterräder und der Geschwindigkeit z. B. linear, so würde dies eine Vergrößerung des Hinterrad-Lenkwinkels und damit eine Vergrößerung der übertragenen Seitenkraft bewirken. Damit aber würde gerade im Bereich hoher Querbeschleunigungen die in der Regel vorliegende Untersteuertendenz überproportional zunehmen.

Daher wird erfindungsgemäß der Lenkwinkel der Hinterräder dann nicht mehr vergrößert, wenn der Lenkwinkel der Vorderräder den Wert erreicht hat, bei dem das Seitenkraftmaximum übertragen wird.

Entsprechendes gilt beim Zurückstellen der Vorderräder in die Ausgangslage. Sofern der Ausgangspunkt für diese Rückstellung ein Lenkwinkel der Vorderräder ist, der kleiner als der Lenkwinkel ist, bei dem noch nicht die maximale Seitenkraft übertragen wird, werden die Hinterräder entsprechend dem vorgegebenen Zusammenhang und entsprechend dem Lenkwinkel der Vorderräder zurückgestellt.

Liegt der Ausgangspunkt bei einem größeren Lenkwinkel als bei demjenigen, bei dem das Seitenkraftmaximum übertragen wird, so wird die Auslenkung der Hinterräder zunächst nicht verändert. Erst ab dem Lenkwinkel, bei dem an den Vorderrädern eine Verkleinerung der übertragenen Seitenkraft erfolgt, werden sie entsprechend dem Lenkwinkel der Vorderräder ebenfalls in ihrem Lenkwinkel verkleinert. Dadurch wird beim An- und auch beim Zurücklenken ein gleiches Fahrverhalten erreicht, sowie eine starke Zunahme der Untersteuertendenz verhindert. Die Fahrstabilität bei Lenkwinkelreduzierung ist auch für Fahrzustände mit hoher Querbeschleunigung hoch.

Der Lenkwinkel , bei dem das Seitenkraftmaximum übertragen wird, ist abhängig von der Fahrzeuggeschwindigkeit. Dieser Zusammenhang ist durch einen hyperbolischen Verlauf geprägt und in Fig. 2 dargestellt. Daraus ergibt sich, daß der Winkel umso kleiner wird, je größer die Fahrzeuggeschwindigkeit ist. Damit aber ergibt sich, daß zusätzlich und vorteilhafterweise die Fahrzeuggeschwindigkeit zu berücksichtigen ist, wenn das gewünschte fahrdynamische Verhalten des Kraftfahrzeuges für sämtliche Geschwindigkeiten erreicht werden soll.

Nimmt man nun einen definierten, z. B. quadratischen Zusammenhang zwischen dem Lenkwinkel der Vorderachse und dem der Hinterachse an, so ergeben sich zunächst, wie in Fig. 3 für zwei verschiedene Fahrzeuggeschwindigkeiten gezeigt, unterschiedliche und strichliert eingezeichnete Kurven. Diese zeigen eine umso größere Steigung, je kleiner die Geschwindigkeit ist. Unter Berücksichtigung des Umstands, daß dieser Zusammenhang nur bis zu dem Lenkwinkel gelten soll, bei dem das Seitenkraftmaximum an der Vorderachse übertragen wird, ergibt sich damit, daß diese Kurven nur bis hin zu einer Grenzkurve maßgeblich sind. Für Vorderachs-Lenkwinkel, die größer als der Lenkwinkel sind, bei dem Seitenkraft-Maximum übertragen wird, soll der Lenkwinkel der Hinterachse nicht mehr verändert werden. Damit aber ergibt sich für den Zusammenhang zwischen dem Lenkwinkel an der Vorder- und dem an der Hinterachse ein Verlauf, der für kleinere Lenkwinkel durch einen z. B. quadratischen Zusammenhang und nach Erreichen der Grenzkurve einen ebenfalls strichliert eingezeichneten, waagrechten Verlauf geprägt ist.

Der in Fig. 3 gezeigte Zusammenhang zeigt beim Übergang zwischen dem elliptischen und dem waagrechten Verlauf einen deutlich erkennbaren Knick. Dieser resultiert aus der Annahme eines exakt definierten Wertes des Schräglauf- und damit des Lenkwinkels (Fig. 1), bei dem das Seitenkraft-Maximum übertragen wird. Da dies jedoch in Wirklichkeit nicht der Fall ist, sondern dieses Maximum innerhalb eines gewissen Lenkwinkelbereichs auftritt, kommt es tatsächlich zu einer Verrundung des Lenkwinkelzusammenhangs zwischen Vorder- und Hinterachse im Übergangsbereich. Dies ist in Fig. 4 gezeigt. Die Folge dieser Verrundung ist eine Anpassung der Änderungen von Vorder- und Hinterrad-Lenkwinkel derart, daß sich die Änderungen der mit Vorder- und Hinterrädern übertragenen Seitenkraft entsprechen.

Der in Fig. 4 gezeigte optimierte Zusammenhang zwischen dem Lenkwinkel der Vorderachse und dem Lenkwinkel der Hinterachse ist geprägt durch verschiedene Einflußfaktoren, die auch zur Begrenzung des Lenkwinkels der Hinterachse führen. Diese Faktoren sind im wesentlichen die Fahrzeuggeschwindigkeit, die Beladung und die Reibwertpaarung zwischen Reifen und Fahrbahn. Da bei geringer Beladung und bei niedrigen Reibwerten (Glatteis) wenig Seitenkraft übertragen werden kann, bedeutet dies auch einen entsprechend niedrigen Verlauf des hier waagrechten Astes der Kurven von Fig. 4. Dieser Ast kann auch entsprechend dem Seitenkraftverlauf wieder in Richtung geringerem Hinterachs-Lenkwinkel verlaufen.

Der Reibwert und die Beladung kann in bekannter Weise mit entsprechenden Gebern erkannt werden, und in ein entsprechendes Steuergerät für die Einstellung und Begrenzung des Hinterachs-Lenkwinkels eingegeben werden.

## Patentansprüche

1. Verfahren zum gleichsinnigen Auslenken der Hinterräder eines Kraftfahrzeugs in vorgegebener Abhängigkeit von der Auslenkung der Vorderräder, dadurch gekennzeichnet, daß unter Zugrundelegung des vorgegebenen Zusammenhangs zwischen Schräglaufwinkel der Vorderräder und der durch diese übertragenen Seitenkraft anhand des Schräglaufwinkels der Vorderräder die übertragene Seitenkraft bestimmt wird und daß der Lenkwinkel der Hinterräder begrenzt wird, wenn die Vorderräder die maximale Seitenkraft übertragen.

2. Verfahren nach Anspruch 1, dadurch gekennzeichnet, daß die Lenkwinkel-Grenze der Hinterräder abhängig von der Fahrzeuggeschwindigkeit ist.

3. Verfahren nach Anspruch 1 oder 2, dadurch gekennzeichnet, daß die Lenkwinkel-Grenze der Hinterräder abhängig vom Reibwert der Räder auf der Fahrbahn ist.

4. Verfahren nach einem der Ansprüche 1 bis 3, dadurch gekennzeichnet, daß die Änderungsrate des Hinterrad-Lenkwinkels degressiv zur Fahrzeuggeschwindigkeit ist.

5. Verfahren nach Anspruch 4, dadurch gekennzeichnet, daß die Änderung des Hinterrad-Lenkwinkels derart an die Änderung des Vorderrad-Lenkwinkels angepaßt ist, daß die Änderungen der mit den Vorder- und Hinterrädern übertragenen Seitenkraft einander entsprechen.

## Claims

1. A method for deflection of the rear wheels of a motor vehicle in the same direction as, and in predetermined dependence on, the deflection of the front wheels, characterised in that the lateral force transferred is determined from the slip angle of the front wheels on the basis of the predetermined relationship between the slip angle of the front wheels and the lateral force transferred through them, and that the steering angle of the rear wheels is limited when the front wheels transfer the maximum lateral force.

2. A method according to claim 1, characterised in that the steering angle limit of the rear wheels is dependent on the speed of the vehicle.

3. A method according to either claim 1 or 2, characterised in that the steering angle limit of the rear wheels is dependent on the coefficient of friction of the wheels on the road surface.

4. A method according to any one of claims 1 to 3, characterised in that the rate of change of the steering angle of the rear wheels is degressive relative to vehicle speed.

5. A method according to claim 4, characterised in that the change in the steering angle of the rear wheels is matched to the change in steering angle of the front wheels such that the changes in the lateral force transferred through the front and rear wheels correspond to each other.

## Revendications

1. Procédé de commande de braquage de même sens des roues arrière d'un véhicule en fonction préétablie du braquage des roues avant, caractérisé en ce qu'en prenant pour base la relation préfixée entre l'inclinaison de l'axe pivot des roues avant et la force latérale transmise par celles-ci, cette force latérale transmise est déterminée à partir de l'inclinaison de l'axe pivot des roues avant et en ce que l'angle de braquage des roues arrière est limité, lorsque les roues avant transmettent la force latérale maximale.

2. Procédé selon la revendication 1, caractérisé en ce que la limite de l'angle de braquage des roues arrière est fonction de la vitesse du véhicule.

3. Procédé selon les revendications 1 ou 2, caractérisé en ce que la limite de l'angle de braquage des roues arrières est fonction du coefficient de frottement des roues sur la chaussée.

4. Procédé selon une des revendications 1 à 3, caractérisé en ce que le taux de variation de l'angle de braquage des roues arrière est dégressif par rapport à la vitesse du véhicule.

5. Procédé selon la revendication 4, caractérisé en ce que la variation de l'angle de braquage des roues arrière est adapté à la variation de l'angle de braquage des roues avant, de sorte que les variations de la force latérale transmise par les roues avant et les roues arrière correspondent les unes aux autres.
